(19) Europäisches Patentamt
European Patent Office
Office européen des brevets

(11) **EP 4 455 192 A1**

(12) **EUROPEAN PATENT APPLICATION**
published in accordance with Art. 153(4) EPC

(43) Date of publication:
**30.10.2024 Bulletin 2024/44**

(21) Application number: **22910524.2**

(22) Date of filing: **11.10.2022**

(51) International Patent Classification (IPC):
**C08J 3/12** (2006.01)      **B01J 20/26** (2006.01)

(52) Cooperative Patent Classification (CPC):
**B01J 20/26; C08J 3/12**

(86) International application number:
**PCT/JP2022/037874**

(87) International publication number:
**WO 2023/119798 (29.06.2023 Gazette 2023/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **21.12.2021 JP 2021207196**

(71) Applicant: **Sumitomo Seika Chemicals Co., Ltd.
Kako-gun, Hyogo 675-0145 (JP)**

(72) Inventors:
• **YAMAMOTO, Tomoka
Himeji-shi, Hyogo 672-8076 (JP)**
• **NAGATANI, Shunpei
Himeji-shi, Hyogo 672-8076 (JP)**

(74) Representative: **Vossius & Partner
Patentanwälte Rechtsanwälte mbB
Siebertstrasse 3
81675 München (DE)**

(54) **COATED RESIN PARTICLES, WATER-ABSORBING RESIN COMPOSITION, AND ABSORBENT BODY**

(57)     One aspect of the present invention is coated resin particles including water absorbent resin particles, and a coating layer coating at least a part of the surface of the water absorbent resin particles, in which the coating layer includes a polymer having a carboxy group, and, a pH value A of the liquid obtained after immersing the coated resin particles in physiological saline for 5 minutes is 6.20 to 7.50.

## Description

### Technical Field

The present invention relates to coated resin particles, a water absorbent resin composition, and an absorbent.

### Background Art

Highly water absorbent resins are used as an absorbent for sanitary materials such as disposable diapers and sanitary products (for example, Patent Literature 1 and Patent Literature 2).

### Citation List

### Patent Literature

[Patent Literature 1] Japanese Unexamined Patent Publication No. H10-101735
[Patent Literature 2] Japanese Unexamined Patent Publication No. 2001-258934

### Summary of Invention

### Technical Problem

Water absorbent resin particles used as absorbents in sanitary materials have room for improvement in terms of storage stability. For example, water absorbent resin particles may aggregate due to moisture absorption, which may cause concerns over quality.

The present invention has an object of providing coated resin particles that include water absorbent resin particles and that are less likely to aggregate due to moisture absorption.

### Solution to Problem

One aspect of the present invention provides the following [1] to [7].

[1] Coated resin particles including water absorbent resin particles, and a coating layer coating at least a part of the surface of the water absorbent resin particles, in which the coating layer includes a polymer having a carboxy group, and a pH value A of a liquid obtained after immersing the coated resin particles in physiological saline for 5 minutes is 6.20 to 7.50.

[2] The coated resin particles according to [1], in which a pH value B of a liquid obtained after immersing the coated resin particles in physiological saline for 30 minutes is 4.50 to 6.50.

[3] The coated resin particles according to [1] or [2], in which the polymer having a monomer unit derived from a carboxy group includes (meth)acrylic acid and/or a salt of (meth)acrylic acid.

[4] The coated resin particles according to any of [1] to [3], in which the polymer having a carboxy group further includes a monomer unit derived from a substituted or unsubstituted alkene.

[5] A water absorbent resin composition including the coated resin particles according to any of [1] to [4], and resin particles having water absorption properties, other than the coated resin particles.

[6] An absorbent including the coated resin particles according to any of [1] to [4].

[7] An absorbent including the water absorbent resin composition according to [5].

### Advantageous Effects of Invention

According to the present invention, it is possible to provide coated resin particles that include water absorbent resin particles and that are less likely to aggregate due to moisture absorption.

### Brief Description of Drawings

Fig. 1 is a schematic cross-sectional view showing one embodiment of coated resin particles.
Fig. 2 is a schematic cross-sectional view showing one embodiment of an absorbent article.

**Description of Embodiments**

A detailed description will be given below of several embodiments of the present invention. However, the present invention is not limited to the following embodiments. In the present specification, "acrylic" and "methacrylic" are collectively denoted as "(meth)acrylic". "Acrylate" and "methacrylate" are also similarly denoted as "(meth)acrylate". In the numerical ranges described stepwise in the present specification, it is possible to arbitrarily combine the upper limit value or lower limit value of the numerical range in a particular step with the upper limit value or lower limit value of the numerical range in another step. In the numerical ranges described in the present specification, the upper limit value or lower limit value of the numerical ranges may be replaced with the values shown in the Examples. The materials exemplified in the present specification may be used alone or in a combination of two or more. In a case where there are a plurality of substances corresponding to each component present in the composition, the content of each component in the composition means the total amount of the plurality of substances present in the composition unless otherwise specified. In the present specification, "physiological saline" is a sodium chloride aqueous solution having a concentration of 0.9% by mass and the concentration of 0.9% by mass is a concentration based on the mass of the physiological saline.

[Coated Resin Particles]

The coated resin particles according to the present embodiment are resin particles having water absorbent resin particles and a coating layer coating at least a part of the surface of the water absorbent resin particles. In the coated resin particles, the coating layer includes a polymer having a carboxy group, and, a pH value A of a liquid obtained after immersing the coated resin particles in physiological saline for 5 minutes is 6.20 to 7.50.

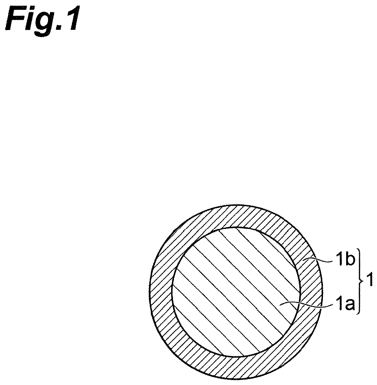

Fig. 1 is a schematic cross-sectional view showing one embodiment of coated resin particles. As shown in Fig. 1(a), coated resin particles 1 include water absorbent resin particles 1a and a coating layer 1b coating at least a part of the surface of the water absorbent resin particles 1a. In Fig. 1(a), the entire surface of the water absorbent resin particles 1 is coated with the coating layer 1b.

<Water Absorbent Resin Particles>

The water absorbent resin particles may include polymer particle. The polymer particle may be crosslinked polymers formed by polymerization of monomers including ethylenically unsaturated monomers. It is possible for the polymer particles to have monomer units derived from ethylenically unsaturated monomers. It is possible to produce polymer particles, for example, using a method including a step for polymerizing a monomer including an ethylenically unsaturated monomer. Examples of the polymerization method include a reverse phase suspension polymerization method, an aqueous solution polymerization method, a bulk polymerization method, a precipitation polymerization method, and the like.

The ethylenically unsaturated monomer may be a water-soluble ethylenically unsaturated monomer. The solubility of the water-soluble ethylenically unsaturated monomer in 100 g of water may be 1.0 g or more at 25°C. Examples of water-soluble ethylenically unsaturated monomers include (meth)acrylic acid and salts thereof, 2-(meth)acrylamide-2-methylpropanesulfonic acid and salts thereof, (meth)acrylamide, N,N-dimethyl(meth)acrylamide, 2-hydroxyethyl(meth)acrylate, N-methylol(meth)acrylamide, polyethylene glycol mono(meth)acrylate, N,N-diethylaminoethyl(meth)acrylate, N,N-diethylaminopropyl(meth)acrylate, and diethylaminopropyl(meth)acrylamide. In a case where the ethylenically unsaturated monomer has an amino group, the amino group may be quaternized. Ethylenically unsaturated monomers may be used alone or in a combination of two or more.

In a case where the ethylenically unsaturated monomer has an acid group, the acid group may be neutralized using an alkaline neutralizing agent before being used in the polymerization reaction. The neutralization degree in the ethylenically unsaturated monomer due to the alkaline neutralizing agent is, for example, 10 mol% to 100 mol% of the acid groups in the ethylenically unsaturated monomer, 50 mol% to 90 mol%, or 60 mol% to 80 mol%.

From the viewpoint of the ease of industrial availability, the ethylenically unsaturated monomer may include at least one compound selected from the group consisting of (meth)acrylic acid and salts thereof, acrylamide, methacrylamide, and N,N-dimethylacrylamide. The ethylenically unsaturated monomer may include at least one compound selected from the group consisting of (meth)acrylic acid and salts thereof, and acrylamide.

As the monomer for obtaining the water absorbent resin particles, a monomer other than the above-mentioned ethylenically unsaturated monomers may be used. It is possible to use such monomers, for example, in a mixture with an aqueous solution including the above-mentioned ethylenically unsaturated monomers. The use amount of ethylenically unsaturated monomer may be 60 mol% to 100 mol%, 70 mol% to 100 mol%, 80 mol% to 100 mol%, 90 mol% to 100

3

mol%, or 95 mol% to 100 mol%, with respect to the total amount of monomers. The ratio of (meth)acrylic acid and salts thereof may be 60 mol% to 100 mol%, 70 mol% to 100 mol%, 80 mol% to 100 mol%, 90 mol% to 100 mol%, or 95 mol% to 100 mol%, with respect to the total amount of monomers.

Although crosslinking occurs due to self-crosslinking during polymerization, crosslinking may be promoted by using an internal crosslinking agent. Using an internal crosslinking agent makes it easy to control the water-absorbent characteristics (water retention capacity and the like) of the water absorbent resin particles. The internal crosslinking agent is usually added to the reaction solution during the polymerization reaction.

The polymer in at least the surface layer portion of the polymer particles may be crosslinked by reaction with a surface crosslinking agent. The surface crosslinking agent may be, for example, a compound having two or more functional groups (reactive functional groups) that are reactive with functional groups derived from ethylenically unsaturated monomers.

In addition to the polymer of the ethylenically unsaturated monomer, the polymer particles may include a certain amount of water and may further include various additional components therein. Examples of additional components include gel stabilizers and metal chelating agents.

The shape of the water absorbent resin particles is not particularly limited and may be, for example, approximately spherical, crushed, or granular, or may be formed by the aggregation of primary particles having these shapes.

The particle size distribution of the water absorbent resin particles may be adjusted by performing operations such as particle size adjustment using classification using a sieve, as necessary. For example, a fraction that passes through a sieve having openings of 850 $\mu$m but does not pass through a sieve having openings of 250 $\mu$m may be used as the water absorbent resin particles.

<Coating Layer>

The coating layer includes a polymer having a carboxy group. The polymer having a carboxy group includes a monomer unit derived from a monomer having a carboxy group. The monomer having a carboxy group may be, for example, (meth)acrylic acid and/or a salt thereof. Examples of the (meth)acrylic acid salt include sodium (meth)acrylate, potassium (meth)acrylate, and the like.

In the polymer having a carboxy group, the carboxy group may be neutralized with an alkaline neutralizing agent. The neutralization degree in the polymer having a carboxy group due to the alkaline neutralizing agent may be, for example, 10 mol% or more, 20 mol% or more, 30 mol% or more, 40 mol% or more, 45 mol% or more, 50 mol% or more, 60 mol% or more, 70 mol% or more, 80 mol% or more, 90 mol% or more, or 95 mol% or more and may be 100 mol% or less, or 98 mol% or less, with respect to the carboxy group in the polymer having a carboxy group. The neutralization degree due to the alkaline neutralizing agent may be, for example, 40 mol% to 100 mol%, or 45 mol% to 98 mol%, with respect to the carboxy group in the polymer having a carboxy group.

The polymer included in the coating layer may include a monomer unit derived from a monomer (other monomer) other than the monomer having a carboxy group. The other monomers may be, for example, substituted or unsubstituted alkenes.

Examples of unsubstituted alkenes include ethylene, propylene, and butene. The unsubstituted alkene is preferably ethylene and/or propylene, of which ethylene is preferable. Examples of substituted alkenes include vinyl esters and the like.

The polymer included in the coating layer may be a copolymer including monomer units derived from a monomer having a carboxy group and a substituted or unsubstituted alkene. The copolymer may be, for example, an ethylene-(meth)acrylic acid salt copolymer, which is a copolymer including monomer units derived from (meth)acrylic acid and/or a salt thereof and ethylene.

The content of the polymer having a carboxy group may be 1 part by mass or more, 5 parts by mass or more, 10 parts by mass or more, 15 parts by mass or more, 20 parts by mass or more, or 25 parts by mass or more and may be 50 parts by mass or less, 45 parts by mass or less, 40 parts by mass or less, or 35 parts by mass or less, with respect to 100 parts by mass of the water absorbent resin particles. The content of the polymer having a carboxy group may be 5 parts by mass to 35 parts by mass with respect to 100 parts by mass of the water absorbent resin particles.

The coating layer may include components (other components) other than the above-mentioned polymer having a carboxy group. Examples of components other than the above-mentioned polymer having a carboxy group include polyalkylene glycol and polyvinyl alcohol. Examples of polyalkylene glycols include polyethylene glycol. The content ratio of other components may be 1 part by mass to 30 parts by mass, 5 parts by mass to 25 parts by mass, or 8 parts by mass to 20 parts by mass, with respect to 100 parts by mass of the above-mentioned polymer having a carboxy group.

The total content of the coating layer may be, for example, 1 part by mass or more, 5 parts by mass or more, 8 parts by mass or more, 10 parts by mass or more, 15 parts by mass or more, 20 parts by mass or more, 25 parts by mass or more, or 30 parts by mass or more and may be 50 parts by mass or less, 45 parts by mass or less, 40 parts by mass or less, or 35 parts by mass or less, with respect to 100 parts by mass of the water absorbent resin particles. The total content of the coating layer may be, for example, 1 part by mass to 40 parts by mass with respect to 100 parts by mass of the water absorbent resin particles.

A pH value A of a liquid obtained after immersing the coated resin particles according to the present embodiment in physiological saline for 5 minutes is 6.20 to 7.50. Since aggregation due to moisture absorption becomes even less likely to occur, the lower limit of pH value A may be 6.25 or more, 6.30 or more, 6.35 or more, 6.40 or more, 6.45 or more, 6.50 or more, 6.55 or more, 6.60 or more, 6.65 or more, 6.70 or more, 6.75 or more, 6.80 or more, 6.85 or more, 6.90 or more, 6.95 or more, 7.00 or more, or 7.05 or more. Since aggregation due to moisture absorption becomes even less likely to occur, the upper limit of the pH value A may be 7.45 or less, 7.40 or less, 7.35 or less, 7.30 or less, 7.25 or less, 7.20 or less, 7.15 or less, or 7.10 or less. Since aggregation due to moisture absorption becomes even less likely to occur, the pH value A may be, for example, 6.25 to 7.20, 6.30 to 7.25, 6.30 to 7.20, 6.30 to 7.15, or 6.30 to 7.10.

It is possible to adjust the pH value A in the above-mentioned range by, for example, controlling the neutralization degree of the carboxy groups in the polymer having carboxy groups included in the coating layer, controlling the type and use amount of the coating material used to form the coating layer, or any combination of these methods.

A pH value B of a liquid obtained after immersing the coated resin particles according to the present embodiment in physiological saline for 30 minutes may be 6.50 or less, 6.45 or less, 6.40 or less, 6.35 or less, 6.30 or less, 6.25 or less, 6.20 or less, or 6.15 or less. The pH value B may be, for example, 4.50 or more, 4.75 or more, 5.00 or more, 5.25 or more, 5.50 or more, 5.75 or more, 6.00 or more, 6.05 or more, 6.10 or more, 6.15 or more, or 6.20 or more. The pH value B may be 4.50 to 6.50. The pH value B being in the above-mentioned range means that the coated resin particles are weakly acidic after swelling, thus, the coated resin particles for which the pH value B is in the above-mentioned range are safe for the human body and have better compatibility with the skin.

It is possible to adjust the pH value B in the above-mentioned range by, for example, controlling the neutralization degree of the carboxy groups in the polymer having carboxy groups included in the coating layer, controlling the type and use amount of the coating material used to form the coating layer, or any combination of these methods.

The pH value A and the pH value B are measured by the method illustrated below. After adding 100 g of physiological saline to a 100 mL polyethylene beaker, a stirrer is used to stir the mixture with a stirring bar at a rotation speed of 750 rpm and 0.5 g of coated resin particles for evaluation are quickly added thereto. Using a pH meter, pH measurement is carried out on the physiological saline to which the coated resin particles for evaluation were added while stirring for 30 minutes. The pH after 5 minutes of stirring is set as the pH value A. The pH after 30 minutes of stirring is set as the pH value B.

The difference between the pH value A and the pH value B (pH value A-pH value B) may be 0.15 or more or 0.20 or more, since both the effects of suppressing aggregation due to moisture absorption and of improving safety for the human body and skin compatibility are better. The difference between the pH value A and the pH value B may be, for example, 0.85 or less, 0.75 or less, 0.70 or less, 0.65 or less, 0.60 or less, 0.55 or less, 0.40 or less, or 0.25 or less. The difference between the pH value A and the pH value B may be, for example, 0.15 to 0.85, 0.15 to 0.75, 0.15 to 0.70, 0.15 to 0.65, 0.20 to 0.85, 0.20 to 0.75, 0.20 to 0.70, or 0.20 to 0.65.

The coated resin particles according to the present embodiment are less likely to aggregate due to moisture absorption. The blocking rate of the coated resin particles according to the present embodiment may be, for example, 5% or less, 3% or less, 1%, or 0%. The blocking rate of the coated resin particles is measured by the method described in the Examples below.

The coated resin particles according to the present embodiment have a coating layer including a polymer having a carboxy group (-COOH) and, in the resin surface portion of the coated resin particles, the carboxy group may be a carboxylate ion (-COO⁻) from which a proton is dissociated. Therefore, ion repulsion due to carboxylate ions may occur in the surface portion of the coated resin particles. It is considered that the ion repulsion is adjusted to an appropriate range for coated resin particles for which, after being immersed in physiological saline for 5 minutes, the pH value A of the liquid is in a specific range, thus, aggregation due to moisture absorption is less likely to occur. However, the mechanism by which the coated resin particles according to the present embodiment make aggregation less likely to occur is not limited thereto.

Although it is also possible to use the coated resin particles of the present embodiment alone, it is also possible to use the coated resin particles of the present embodiment as mixed particles in a mixture with resin particles (simply referred to below as "other resin particles") having water absorption properties other than the coated resin particles.

It is possible to produce the coated resin particles according to the present embodiment, for example, by a method including forming a coating layer on at least part of the surface of the water absorbent resin particles by bringing the water absorbent resin particles into contact with a coating material including a polymer having a carboxy group, and adjusting the pH value A of the liquid obtained after immersing the coated resin particles in physiological saline for 5 minutes to 6.20 to 7.50. The method for producing coated resin particles according to the present embodiment may further include adjusting the pH value B of the liquid obtained after immersing the coated resin particles in physiological saline for 30 minutes to 4.50 to 6.50. The method for adjusting the pH value A and the pH value B may be as mentioned above. As a specific form of the method for producing coated resin particles, it is possible to apply the above-mentioned form.

It is possible to form the coating layer on at least a part of the surface of the water absorbent resin particles, for example, by bringing the water absorbent resin particles into contact with a coating material in an emulsion state or a solution state.

It is possible to form the coating layer, for example, by (1) a method using an eggplant-shaped flask, (2) a method using a sprayer, or (3) a method using various granulators.

(1) Method Using Eggplant-Shaped Flask

In the method using an eggplant-shaped flask, first, the coating material is injected into the eggplant-shaped flask and then the water absorbent resin particles are injected therein. The eggplant-shaped flask is attached to an evaporator, heated while rotating, and the liquid medium included in the coating material is distilled off under reduced pressure conditions. Thus, coated resin particles are obtained in which the surfaces of the water absorbent resin particles are coated with the coating material.

(2) Method Using Sprayer

In the method using a sprayer, first, water absorbent resin particles are added to a separable flask equipped with a stirrer blade and stirred. A coating material is sprayed onto the water absorbent resin particles stirred up by the stirrer blade. It is possible to spray the coating material using, for example, a two-fluid type nozzle. In anticipation of an even coating, it is desirable for the coating material to be sprayed in mist form using an air stream of an inert gas such as nitrogen. Thereafter, the contents of the separable flask are taken out, heated in a hot air dryer, and then cooled to room temperature to obtain coated resin particles.

(3) Method Using Various Granulators

Examples of granulators used for producing coated resin particles include a rolling granulator, a stirring granulator, and a fluidized bed granulator.

In a case of using a rolling granulator, an inclined shallow circular container equipped with the rolling granulator is rotated, the water absorbent resin particles are supplied to the circular container, and an appropriate amount of the coating material is added thereto. Then, due to the solvent or dispersion medium included in the coating material, some of the water absorbent resin particles being rolled are aggregated and a coating layer is formed on the surface thereof. It is possible to perform the step of adding the water absorbent resin particles and coating material a plurality of times as necessary.

In a case of using a stirring granulator, the water absorbent resin particles are injected into a mixer equipped in the stirring granulator, mixed by stirring, and the coating material is added thereto. Then, due to the liquid medium included in the coating material, some of the water absorbent resin particles being stirred are aggregated and a coating layer is formed on the surface thereof. It is possible to perform the step of adding the water absorbent resin particles and coating material a plurality of times as necessary. It is possible to suppress excessive aggregation of the water absorbent resin particles by controlling the shear force of the mixer.

In a case of using a fluidized bed granulator, first, water absorbent resin particles are injected into a container equipped with a fluidized bed granulator that is able to blow hot air from the bottom thereof and the water absorbent resin particles are fluidized preliminarily. Thereafter, when the coating material is sprayed from a nozzle provided in the container, due to the liquid medium included in the coating material, some of the water absorbent resin particles being stirred are aggregated and a coating layer is formed on the surface thereof. It is possible to perform the spraying of the coating material a plurality of times as necessary. It is possible to suppress excessive aggregation of the water absorbent resin particles by adjusting the spraying amount and spraying frequency of the coating material. As the fluidized bed granulator, for example, it is possible to use a fluidized bed granulator FBD/SG (manufactured by Yenchen Machinery).

The aggregation due to moisture absorption of the coated resin particles according to the present embodiment is suppressed. Accordingly, as one embodiment of the present invention, there is provided a method for suppressing aggregation due to moisture absorption of coated resin particles including water absorbent resin particles, the method including forming a coating layer including a polymer having a carboxy group on at least a part of the surface of the water absorbent resin particles and adjusting the pH value A of the liquid after immersing the coated resin particles in physiological saline for 5 minutes to 6.20 to 7.50. As a specific form of the method for suppressing aggregation due to moisture absorption of coated resin particles including water absorbent resin particles, it is possible to apply the above-mentioned form.

[Water Absorbent Resin Composition]

The water absorbent resin composition according to the present embodiment includes the above-mentioned coated resin particles and resin particles (other resin particles) having water absorption properties other than the coated resin particles. The coated resin particles may be used in a mixture of a plurality of types of coated resin particles having different coating layer thicknesses and/or coating layer materials.

In the water absorbent resin composition, the content of the coated resin particles may be, for example, 5 parts by mass or more or 15 parts by mass or more and may be 95 parts by mass or less, 85 parts by mass or less, 60 parts by mass or less, 40 parts by mass or less, 30 parts by mass or less, or 25 parts by mass or less, with respect to a total of 100 parts by mass of the coated resin particles and other resin particles.

The water absorbent resin particles (to be coated with the coating layer) forming the coated resin particles may be the same particles as the other resin particles or may be different particles.

[Absorbent Article]

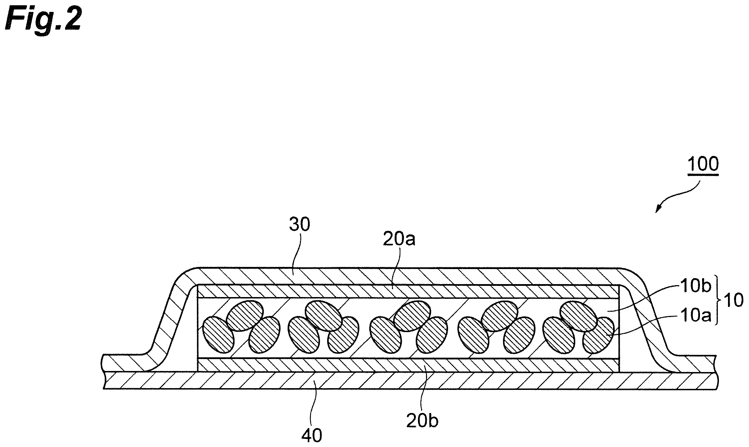

Coated resin particles are used, for example, to form an absorbent that forms an absorbent article such as a diaper. Fig. 2 is a cross-sectional view showing an example of an absorbent article. An absorbent article 100 shown in Fig. 2 is provided with a sheet-shaped absorbent 10, core wraps 20a and 20b, a liquid permeable sheet 30, and a liquid impermeable sheet 40. In the absorbent article 100, the liquid impermeable sheet 40, the core wrap 20b, the absorbent 10, the core wrap 20a, and the liquid permeable sheet 30 are laminated in this order. Fig. 2 illustrates portions where there are gaps between the members, but the members may be in close contact with each other without such gaps being present.

The absorbent 10 has the coated resin particles 10a according to the above-mentioned embodiment and a fiber layer 10b including a fibrous material. The coated resin particles 10a are dispersed in the fiber layer 10b.

The core wrap 20a is arranged on one surface side of the absorbent 10 (on the upper side of the absorbent 10 in Fig. 2) in a state of contact with the absorbent 10. The core wrap 20b is arranged on the other surface side of the absorbent 10 (the lower side of the absorbent 10 in Fig. 2) in a state of contact with the absorbent 10. The absorbent 10 is arranged between the core wrap 20a and the core wrap 20b. Examples of the core wraps 20a and 20b include tissue, nonwoven fabric, and the like. The core wrap 20a and the core wrap 20b have, for example, main surfaces of the same size as the absorbent 10.

The liquid permeable sheet 30 is arranged at the outermost part on the side where the liquid to be absorbed enters. The liquid permeable sheet 30 is arranged on the core wrap 20a in a state of contact with the core wrap 20a. Examples of the liquid permeable sheet 30 include nonwoven fabrics, porous sheets, and the like formed of synthetic resins such as polyethylene, polypropylene, polyester, and polyamide. The liquid impermeable sheet 40 is arranged at the outermost part of the absorbent article 100 on the opposite side from the liquid permeable sheet 30. The liquid impermeable sheet 40 is arranged on the lower side of the core wrap 20b in a state of contact with the core wrap 20b. Examples of the liquid impermeable sheet 40 include sheets formed of synthetic resins such as polyethylene, polypropylene, and polyvinyl chloride, sheets formed of composite materials of these synthetic resins and nonwoven fabrics, and the like. The liquid permeable sheet 30 and the liquid impermeable sheet 40 have, for example, main surfaces wider than the main surface of the absorbent 10 and the outer edges of the liquid permeable sheet 30 and the liquid impermeable sheet 40 extend on the periphery of the absorbent 10 and core wraps 20a and 20b.

The magnitude relationships among the absorbent 10, the core wraps 20a and 20b, the liquid permeable sheet 30, and the liquid impermeable sheet 40 are not particularly limited and may be adjusted, as appropriate, depending on the use of the absorbent article or the like. The method for retaining the shape of the absorbent 10 using the core wraps 20a and 20b is not particularly limited and the absorbent may be wrapped with a plurality of core wraps as shown in Fig. 2 or the absorbent may be wrapped with a single core wrap.

The absorbent 10 may further include resin particles (other resin particles) having water absorption properties other than the coated resin particles 10a. In a case where other resin particles are included, the content of the coated resin particles 10a may be, for example, 5 parts by mass or more or 15 parts by mass or more and may be 95 parts by mass or less or 85 parts by mass or less, with respect to a total of 100 parts by mass of the coated resin particles and other resin particles.

**Examples**

A more detailed description will be given below of the present invention with reference to Examples. However, the present invention is not limited to these Examples.

[Comparative Example 1]

A round-bottomed cylindrical type separable flask having an inner diameter of 11 cm and a volume of 2 L and equipped with a reflux cooling device, a dropping funnel, a nitrogen gas introduction tube, and a stirrer (having stirrer blades in which four inclined paddle blades having a blade diameter of 5 cm are set in two stages) was prepared. 293 g of n-heptane (hydrocarbon dispersion medium) and 0.736 g of a maleic anhydride-modified ethylene-propylene copolymer (polymeric dispersant, Mitsui Chemicals, Inc., Hi-Wax 1105A) were added to this separable flask to obtain a mixture. The dispersant was dissolved by heating the mixture to 80°C while stirring at a rotation speed of 300 rpm. Thereafter, the mixture was cooled to 55°C.

Subsequently, 92.0 g of an 80.5% by mass acrylic acid aqueous solution (acrylic acid: 1.03 mol) was put into a triangular flask having a volume of 500 mL. Subsequently, while cooling from the outside, 75 mol% of the acrylic acid was neutralized by the dropwise addition of 102.2 g of a 30% by mass sodium hydroxide aqueous solution. Subsequently, 0.092 g of hydroxylethyl cellulose (thickener, Sumitomo Seika Chemicals Co., Ltd., HEC AW-15F), 0.0736 g (0.272 mmol) of potassium persulfate (water-soluble radical polymerization initiator), 0.0101 g (0.0580 mmol) of ethylene glycol diglycidyl ether (internal crosslinking agent), and 34.66 g of ion-exchanged water were added and then dissolved to prepare a first stage monomer aqueous solution.

After adding the above-mentioned first stage monomer aqueous solution to the above-mentioned separable flask, stirring was carried out for 10 minutes. A surfactant solution was obtained by heat-dissolving 0.736 g of sucrose stearate (surfactant, manufactured by Mitsubishi-Chemical Foods Corporation, Ryoto Sugar Ester S-370, HLB: 3) in 6.62 g of n-heptane. A reaction solution was obtained by adding 7.356 g of the obtained surfactant solution to a separable flask. Then, while stirring the reaction solution at a rotation speed of 550 rpm, the inside of the separable flask system was sufficiently substituted with nitrogen. Thereafter, the separable flask was immersed in a water bath at 70°C to heat the reaction solution and first stage polymerization was performed for 10 minutes to obtain a first stage reaction mixture.

Subsequently, 128.8 g (acrylic acid: 1.44 mol) of an 80.5% by mass acrylic acid aqueous solution was put into another triangular flask having a volume of 500 mL. Subsequently, while cooling from the outside, 75 mol% of acrylic acid was neutralized by the dropwise addition of 143.1 g of a 30% by mass sodium hydroxide aqueous solution. Thereafter, 0.1030 g (0.3810 mmol) of potassium persulfate, 0.0116 g (0.0666 mmol) of ethylene glycol diglycidyl ether (internal crosslinking agent), and 3.13 g of ion-exchanged water were added and then dissolved to prepare a second stage monomer aqueous solution.

After cooling the first stage reaction mixture to 25°C while stirring at a rotation speed of 1000 rpm, the total amount of the second stage monomer aqueous solution was added to the first stage reaction mixture to obtain a reaction solution. While stirring the reaction solution, the inside of the system was sufficiently substituted with nitrogen. Thereafter, the separable flask was immersed in a water bath at 70°C to heat the reaction solution and second stage polymerization was performed for 5 minutes to obtain a second stage reaction mixture (polymer particles before surface crosslinking).

After the second stage polymerization, the second stage reaction mixture was heated in an oil bath at 125°C and 252 g of water was extracted to the outside of the system by azeotropic distillation of n-heptane and water while refluxing the n-heptane. Subsequently, 0.0884 g (0.5075 mmol) of ethylene glycol diglycidyl ether was added as a surface crosslinking agent and then the result was held at 83°C for 2 hours to obtain a dispersion liquid of polymer particles after surface crosslinking.

Thereafter, the dispersion liquid of polymer particles after the above-mentioned surface crosslinking was heated in an oil bath at 125°C and dried by evaporating the n-heptane to obtain a dried product. The dried product was passed through a sieve having openings of 850 $\mu$m to obtain 233.4 g of water absorbent resin particles (1) in the form of aggregated spherical particles in an uncoated state.

[Example 1]

(Coating Step)

The water absorbent resin particles (1) obtained by carrying out Comparative Example 1 a plurality of times were classified using a comb having openings of 250 $\mu$m to obtain 500 g or more of water absorbent resin particles having a particle size of 250 $\mu$m to 850 $\mu$m.

In a poly beaker having an internal volume of 1 L, as a coating material, 178.6 g of a 28% by mass water-dispersed emulsion of an ethylene-sodium acrylate copolymer having a neutralization degree of 48 mol% (ZAIKTHENE NC, Sumitomo Seika Chemicals Co., Ltd.) and 5.0 g of polyethylene glycol (PEG6000, Tokyo Kasei Kogyo Co., Ltd.) were diluted with 316.4 g of ion-exchanged water to prepare a coating liquid.

500.0 g of water absorbent resin particles (1) were injected into the container of a fluidized bed granulator and hot air at 50°C was blown from the bottom of the container. Subsequently, 500 g of the coating liquid adjusted as mentioned above was sprayed onto the water absorbent resin particles being blown up by the air while drying. After spraying the coating material, drying was carried out at 50°C for 30 minutes. After the drying, coated resin particles were obtained.

50.0 g of the obtained coated resin particles were spread in a metal vat 26 cm long and 20 cm wide and the vat was covered with aluminum foil. A hole was made in the aluminum foil and the coated resin particles were heated for 60 minutes in a hot air dryer (ADVANTEC, FV-320) set at 80°C to obtain 50.0 g of coated resin particles (2).

[Example 2]

50 g of coated resin particles (3) were obtained in the same manner as in Example 1, except for using, in the coating step, a coating liquid in which 200.0 g of a 25% by mass water-dispersed emulsion of an ethylene-sodium acrylate copolymer having a neutralization degree of 75 mol% (ZAIKTHENE N, Sumitomo Seika Chemicals Co., Ltd.) and 5.0 g of polyethylene glycol (PEG6000, Tokyo Kasei Kogyo Co., Ltd.) were diluted with 295.0 g of ion-exchanged water.

[Example 3]

50 g of coated resin particles (4) were obtained in the same manner as in Example 1, except for using, in the coating step, a coating liquid in which 600.0 g of a 25% by mass water-dispersed emulsion of an ethylene-sodium acrylate copolymer having a neutralization degree of 75 mol% (ZAIKTHENE N, Sumitomo Seika Chemicals Co., Ltd.) was diluted with 900.0 g of ion-exchanged water.

[Example 4]

50 g of coated resin particles (5) were obtained in the same manner as in Example 1, except for using, in the coating step, a coating liquid in which 600.0 g of a 25% by mass water-dispersed emulsion of an ethylene-sodium acrylate copolymer having a neutralization degree of 75% (ZAIKTHENE N, Sumitomo Seika Chemicals Co., Ltd.) and 15.0 g of polyethylene glycol (PEG6000, Tokyo Kasei Kogyo Co., Ltd.) were diluted with 885.0 g of ion-exchanged water.

[Example 5]

(Emulsion Material Preparation Step)

Water and ice were added to a plastic vat 27 cm long, 38 cm wide, and 7 cm deep to prepare an ice bath at 3°C. A glass beaker having an internal volume of 1 L was placed in this ice bath and 266.3 g of ion-exchanged water was added thereto. The ice bath was placed on top of a magnetic stirrer, a stirrer tip was added to the inside of the beaker, and stirring was carried out.

9.44 g of sodium hydroxide (granules) (Nacalai Tesque Inc.) was added little by little to a beaker to prepare a sodium hydroxide aqueous solution.

A round-bottomed cylindrical type separable flask having an inner diameter of 11 cm and an internal volume of 2 L and equipped with a reflux cooling device, a thermometer, and a stirrer (stirrer blades having four inclined paddle blades having a blade diameter of 5 cm) was prepared. 100 g of an ethylene-acrylic acid copolymer (SK Global Chemical: Primacor 5980i) was added to this flask. Thereafter, the total amount of the above-mentioned sodium hydroxide aqueous solution was added thereto. Thereafter, the beaker used to prepare the sodium hydroxide aqueous solution was washed with 50.0 g of ion-exchanged water and the washing water was added to the separable flask to obtain a reaction solution.

While stirring the reaction solution in a stirrer at a rotation speed of 500 rpm, the result was immersed in an oil bath at 103°C and the internal temperature was raised to 95°C. Thereafter, the temperature of the oil bath was appropriately adjusted such that the internal temperature was 95°C to 97°C, which was maintained for 4 hours.

Thereafter, the separable flask was pulled up from the oil bath and left to cool at room temperature until the internal temperature reached 35°C. After confirming that the internal temperature was 35°C or lower, the reaction solution was filtered through a nylon mesh having openings of 108 μm and a 25% water-dispersed emulsion material of an ethylene-sodium acrylate copolymer having a neutralization degree of 85% was obtained as the filtrate.

50 g of coated resin particles (6) were obtained in the same manner as in Example 1, except for using, in the coating step, a coating liquid for which 600.0 g of the 25% water-dispersed emulsion of the ethylene-sodium acrylate copolymer having a neutralization degree of 85% prepared as mentioned above and 25.0 g of polyethylene glycol (PEG6000, Tokyo Kasei Kogyo Co., Ltd.) were diluted with 875.0 g of ion-exchanged water and for heating the coated resin particles for 60 minutes in a hot air dryer (ADVANTEC, FV-320) set to 100°C.

[Example 6]

A 10% water-dispersed emulsion material of an ethylene-sodium acrylate copolymer having a neutralization degree of 95% was obtained by performing neutralization in the same manner as Example 1 except that, in the emulsion material preparation step, 897.41 g of ion-exchanged water and 10.55 g of sodium hydroxide (granules) were placed in a glass beaker having an internal volume of 500 mL and dissolved to prepare a sodium hydroxide aqueous solution.
50 g of coated resin particles (7) were obtained in the same manner as in Example 5, except for using, in the coating step, a coating liquid in which, 500.0 g of the 10% by mass water-dispersed emulsion of an ethylene-sodium acrylate copolymer having a neutralization degree of 95 mol% prepared as mentioned above and 5.0 g of polyethylene glycol (PEG6000, Tokyo Kasei Kogyo Co., Ltd.) were mixed.

[Example 7]

50 g of coated resin particles (8) were obtained in the same manner as in Example 5, except for using, in the coating step, a coating liquid in which 1500.0 g of the 10% by mass water-dispersed emulsion of an ethylene-sodium acrylate copolymer having a neutralization degree of 95 mol% prepared as mentioned above and 25.0 g of polyethylene glycol (PEG6000, Tokyo Kasei Kogyo Co., Ltd.) were mixed and for heating the coated resin particles for 60 minutes in a hot air dryer (ADVANTEC, FV-320) set at 90°C.

[Comparative Example 2]

50 g of coated resin particles (9) were obtained in the same manner as in Example 1, except for using, in the coating step, a coating liquid in which 60.0 g of a 25% by mass water-dispersed emulsion of an ethylene-sodium acrylate copolymer having a neutralization degree of 75 mol% (Zaikthene N, SUMITOMO SEIKA CHEMICALS CO., LTD.) were diluted with 90.0 g of ion-exchanged water.

[Comparative Example 3]

A coating liquid was prepared by mixing 25 g of polyvinyl alcohol (Kuraray Poval 3-98, Kuraray Co., Ltd.) as a coating material, 332.5 g of ion-exchanged water, and 142.5 g of ethanol in a poly beaker having an internal volume of 1 L. 50.0 g of coated resin particles (10) were obtained in the same manner as in Comparative Example 2, except for using the above coating liquid, setting the air blowing temperature of the fluidized bed granulator to 80°C, and setting the heating temperature of the hot air dryer to 140°C.

[Evaluation of pH Change]

After adding 100 g of physiological saline to a 100 mL polyethylene beaker, stirring is carried out using a stirrer (Masuda Corp.: Magnetic Stirrer SM-15C) with a stirring bar (made of Teflon, 8 mm $\Phi$ x 30 mm) at a rotation speed of 650 rpm, and 0.5 g of particles for evaluation are added quickly thereto. The pH of the solution is measured using a benchtop pH meter (F-24, Horiba Ltd.) while stirring for 30 minutes. The pH after 5 minutes of stirring and the pH after 30 minutes of stirring were measured and set as the pH value A and the pH value B, respectively. The pH change was calculated using the following formula.

pH change = pH (after 30 minutes of stirring) - pH (after 5 minutes of stirring)

[Measurement of Blocking Rate]

The conditions of a high temperature and humidity chamber (ESPEC Corp.: LHU-113) are adjusted to be 30±0.5°C with a relative humidity of 90±1% RH. 5.0 g±0.1 g of particles for evaluation are added to a metal Petri dish having a diameter of 5cm and spread evenly. The metal petri dish containing the above-mentioned sample is placed in the high temperature and humidity chamber and left for 24 hours. After 24 hours, the petri dish is taken out and the weight thereof (W1) is measured. The metal petri dish containing the sample is placed upside down on a 12-mesh sieve and the particles that absorbed moisture are taken out. After taking out the moisture absorbing sample, the weight (W0) of the empty petri dish is measured. The sieve is gently shaken by hand 7 times to confirm that no particles fall from the sieve. The weight (W2) of the particles that absorbed moisture remaining on the sieve is measured. The blocking rate is calculated using the following formula.

$$\text{Blocking rate (\%)} = W2/(W1-W0) \times 100$$

In Table 1, "P(E-AANa)" indicates the ethylene-sodium acrylate copolymer, "base material" indicates the water absorbent resin particles (1) themselves (resin particles without a coating layer), and "PVA" indicates polyvinyl alcohol. In Table 1, the neutralization degree indicates the neutralization degree due to an alkaline neutralizing agent and indicates the ratio of the molar number of the neutralized acid groups in the polymer with respect to the total molar number of acid groups in the polymer used for the coating material (molar number of neutralized acid groups/total molar number of acid groups x 100). The addition amount of the main component in Table 1 is the mass (unit: parts by mass) of the main component (P-EAANa or PVA) of the coating material with respect to 100 parts by mass of the water absorbent resin particles to be coated, and the addition amount of PEG is the mass (unit: parts by mass) of polyethylene glycol with respect to 100 parts by mass of the water absorbent resin particles to be coated.

[Table 1]

| No | Main component of coating material | Neutralization degree | Addition amount (parts by mass) | | pH value A 5 minute value | pH value B 30 minute value | Difference 5 minute value - 30 minute value | Moisture absorption test (blocking rate (%)) |
|---|---|---|---|---|---|---|---|---|
| | | | Main component | PEG | | | | |
| Example 1 | P (E-AANa) | 48% | 10 | 1 | 6.23 | 6.08 | 0.15 | 3 |
| Example 2 | | 75% | 10 | 1 | 6.34 | 6.14 | 0.20 | 0 |
| Example 3 | | | 30 | - | 6.57 | 6.39 | 0.18 | 0 |
| Example 4 | | | 30 | 3 | 7.10 | 6.45 | 0.65 | 0 |
| Example 5 | | 85% | 30 | 5 | 7.21 | 6.49 | 0.72 | 1 |
| Example 6 | | 95% | 10 | 1 | 6.45 | 6.21 | 0.24 | 0 |
| Example 7 | | | 30 | 5 | 7.24 | 6.43 | 0.81 | 3 |
| Comparative Example 1 | Base material | - | - | - | 5.78 | 5.80 | 0.02 | 97 |
| Comparative Example 2 | P (E-AANa) | 75% | 3 | - | 6.06 | 6.05 | 0.01 | 98 |
| Comparative Example 3 | PVA | - | 5 | - | 6.13 | 6.13 | 0.00 | 79 |

The coated resin particles of Examples had a low blocking rate measured by a moisture absorption test and were less likely to aggregate due to moisture absorption.

**Reference Signs List**

1, 10a: Coated resin particles,
1a: Water absorbent resin particles,
1b: Coating layer,
10: Absorbent,
10b: Fiber layer,
20a, 20b: Core wrap,
30: Liquid permeable sheet,
40: Liquid impermeable sheet,
100: Absorbent article.

**Claims**

1. Coated resin particles comprising:

   water absorbent resin particles; and
   a coating layer coating at least a part of the surface of the water absorbent resin particles,
   wherein the coating layer comprises a polymer having a carboxy group, and
   a pH value A of a liquid obtained after immersing the coated resin particles in physiological saline for 5 minutes is 6.20 to 7.50.

2. The coated resin particles according to claim 1,
   wherein a pH value B of a liquid obtained after immersing the coated resin particles in physiological saline for 30 minutes is 4.50 to 6.50.

3. The coated resin particles according to claim 1 or 2,
   wherein the polymer having a carboxy group comprises a monomer unit derived from (meth)acrylic acid and/or a salt of (meth)acrylic acid.

4. The coated resin particles according to claim 1 or 2,
   wherein the polymer having a carboxy group further comprises a monomer unit derived from a substituted or unsubstituted alkene.

5. A water absorbent resin composition comprising:

   the coated resin particles according to claim 1 or 2; and
   resin particles having water absorption properties, other than the coated resin particles.

6. An absorbent comprising:
   the coated resin particles according to claim 1 or 2.

7. An absorbent comprising:
   the water absorbent resin composition according to claim 5.

Fig.1

EP 4 455 192 A1

## Fig.2

## INTERNATIONAL SEARCH REPORT

International application No.

**PCT/JP2022/037874**

### A. CLASSIFICATION OF SUBJECT MATTER

***C08J 3/12***(2006.01)i; ***B01J 20/26***(2006.01)i
FI:   C08J3/12 Z CEY; B01J20/26 D

According to International Patent Classification (IPC) or to both national classification and IPC

### B. FIELDS SEARCHED

Minimum documentation searched (classification system followed by classification symbols)

C08J3/00-3/28; B01J20/26

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/117786 A1 (SUMITOMO SEIKA CHEMICALS CO., LTD.) 17 June 2021 (2021-06-17) claims, paragraphs [0043]-[0045], [0049], [0051], example 5, table 1 | 1-7 |
| A | JP 3-285918 A (TOKAI RUBBER IND LTD) 17 December 1991 (1991-12-17) claims, examples | 1-7 |
| A | JP 2010-533766 A (EVONIK STOCKHAUSEN, INC) 28 October 2010 (2010-10-28) entire text | 1-7 |
| A | JP 2009-519356 A (EVONIK STOCKHAUSEN, INC) 14 May 2009 (2009-05-14) entire text | 1-7 |
| A | JP 2010-513631 A (BASF SE) 30 April 2010 (2010-04-30) entire text | 1-7 |
| A | JP 11-347403 A (SANYO CHEM IND LTD) 21 December 1999 (1999-12-21) entire text | 1-7 |

☑ Further documents are listed in the continuation of Box C.     ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 December 2022** | **20 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2022/037874**

| C. | DOCUMENTS CONSIDERED TO BE RELEVANT | |
|---|---|---|
| Category* | Citation of document, with indication, where appropriate, of the relevant passages | Relevant to claim No. |
| P, A | WO 2022/209536 A1 (SUMITOMO SEIKA CHEMICALS CO., LTD.) 06 October 2022 (2022-10-06)<br>  entire text | 1-7 |

Form PCT/ISA/210 (second sheet) (January 2015)

INTERNATIONAL SEARCH REPORT
Information on patent family members

International application No.

**PCT/JP2022/037874**

| Patent document cited in search report | | | Publication date (day/month/year) | Patent family member(s) | | | Publication date (day/month/year) |
|---|---|---|---|---|---|---|---|
| WO | 2021/117786 | A1 | 17 June 2021 | WO | 2021/117780 | A1 | |
| | | | | WO | 2021/117781 | A1 | |
| | | | | WO | 2021/117782 | A1 | |
| | | | | WO | 2021/117783 | A1 | |
| | | | | WO | 2021/117784 | A1 | |
| | | | | WO | 2021/117785 | A1 | |
| JP | 3-285918 | A | 17 December 1991 | (Family: none) | | | |
| JP | 2010-533766 | A | 28 October 2010 | US | 2009/0023848 | A1 | |
| | | | | WO | 2009/011717 | A1 | |
| | | | | EP | 2167552 | A1 | |
| | | | | KR | 10-2010-0040858 | A | |
| | | | | CN | 101802029 | A | |
| JP | 2009-519356 | A | 14 May 2009 | US | 2007/0135554 | A1 | |
| | | | | WO | 2007/070776 | A2 | |
| | | | | EP | 1969053 | A1 | |
| | | | | CN | 101326234 | A | |
| | | | | KR | 10-2008-0092341 | A | |
| JP | 2010-513631 | A | 30 April 2010 | US | 2010/0294988 | A1 | |
| | | | | WO | 2008/077779 | A1 | |
| | | | | EP | 2125047 | A1 | |
| | | | | CN | 101573147 | A | |
| | | | | TW | 200840827 | A | |
| JP | 11-347403 | A | 21 December 1999 | JP | 11-347402 | A | |
| WO | 2022/209536 | A1 | 06 October 2022 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H10101735 A

- JP 2001258934 A